# EUROPÄISCHE PATENTSCHRIFT

(11) **EP 3 034 466 B1**
(45) Veröffentlichungstag und Bekanntmachung des Hinweises auf die Patenterteilung: **18.10.2017**
(21) Anmeldenummer: 15000862.1
(22) Anmeldetag: 24.03.2015
(51) Int. Cl.: C01B 23/00, B01D 53/00, B01D 51/10, B01D 53/047, B01D 53/22

(54) **KOMBINIERTES MEMBRAN-DRUCKWECHSELADSORPTIONS- VERFAHREN ZUR RÜCKGEWINNUNG VON HELIUM**
COMBINED MEMBRANE PRESSURE CHANGE ADSORPTION METHOD FOR RECOVERING HELIUM
PROCÉDÉ COMBINÉ D'ADSORPTION MODULÉE EN PRESSION POUR MEMBRANE DESTINÉ À LA RÉCUPÉRATION D'HÉLIUM

(30) Priorität: 17.12.2014 DE 102014018883
(43) Veröffentlichungstag der Anmeldung: 22.06.2016
(73) Patentinhaber: Linde Aktiengesellschaft, 80331 München (DE)
(72) Erfinder: Voss, Christian, 82538 Geretsried (DE); Tota, Akos, 81479 München (DE); Bauer, Martin, 80804 München (DE); Jennewein, Frank, 81379 München (DE)
(74) Vertreter: Gellner, Bernd

(56) Entgegenhaltungen:
- WO-A1-2013/098024
- DE-A1-102007 022 963
- US-A1- 2005 217 479

## Beschreibung

Die Erfindung betrifft ein Verfahren zur Rückgewinnung von Helium aus einem Prozessgas.

Aus dem Stand der Technik sind verschiedene Verfahren bekannt, um (insbesondere reines) Helium aus einem heliumhaltigen Gas zu gewinnen beziehungsweise rückzugewinnen beziehungsweise den Heliumgehalt aufzukonzentrieren. Zum Beispiel ist aus der EP 1 427 508 A1 ein kombiniertes Membran-Adsorptionsverfahren zur Rückgewinnung von Helium bekannt. Hierbei wird eingesetztes (insbesondere reines) Helium durch eine Anwendung verunreinigt. Das verunreinigte Helium wird anschließend adsorptiv gereinigt.

Weiterhin ist aus der US 5,632,803 A ein Verfahren bekannt, bei dem aus einem bei erhöhtem Druck vorliegenden Prozessgas in einem ersten Schritt mittels einer Membrantrennstufe ein mit Helium angereicherte Permeatstrom gewonnen wird. In einer ersten Druckwechseladsorption erfolgt anschließend eine Aufkonzentrierung des Permeatstroms auf etwa 50 Vol.-% Helium. Mit einer zweiten Druckwechseladsorption wird dann aus diesem aufkonzentrierten Strom ein Heliumprodukt mit einer Reinheit von über 95 Vol.-% gewonnen.

Es sind weiterhin Verfahren bekannt, bei denen rein adsorptive oder kryogene Ansätze verfolgt werden. Häufig handelt es sich dabei um Verfahren, die lediglich der Aufkonzentrierung von Helium dienen.

Helium ist für viele Anwendungen von großer Bedeutung, liegt jedoch in der Regel nur in verdünnter Form, beispielsweise in Erdgas oder Spülgasen diverser Produktionsverfahren, vor. Weil es sich um einen endlichen Rohstoff handelt, sind Verfahren, mit denen Helium gewonnen oder zurückgewonnen werden kann, von zunehmender wirtschaftlicher Bedeutung. Es ist daher erforderlich, ein Verfahren zu finden, mit dem Helium mit hoher Reinheit, aber zugleich hoher Ausbeute (zurück-) gewonnen werden kann.

Hiervon ausgehend liegt der vorliegenden Erfindung die Aufgabe zugrunde, ein Verfahren zu schaffen, mit dem Helium mit vorzugsweise hoher Reinheit bei gleichzeitig hoher Ausbeute gewinnbar ist. Die erfindungsgemäßen Merkmale ergeben sich aus dem unabhängigen Anspruch, zu dem vorteilhafte Ausgestaltungen in den abhängigen Ansprüchen aufgezeigt sowie nachfolgend beschrieben werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die erfindungsgemäße Aufgabe wird dadurch gelöst, dass ein Verfahren zur Gewinnung von Helium aus einem heliumhaltigen Prozessgas beschrieben, welches insbesondere unter Verwendung einer erfindungsgemäßen Anlage durchgeführt wird, und welches zumindest die folgenden Schritte aufweist:
a. Zuführen eines heliumhaltigen Prozessgases, welches einen Druck von weniger als 15 bar, vorzugsweise von weniger als 10 bar aufweist, zu einer Verdichtung, die das Prozessgas mittels eines Verdichters vor der Einleitung in die erste Membrantrennstufe verdichtet. Insbesondere ist kein weiterer Verdichter in der Anlage vorgesehen;
b. Zuführen des aus der Verdichtung austretenden Prozessgases zu einer Vorreinigungseinheit , bei der die störenden Komponenten wie SF6 oder NF3,ein Metall-hydrid entfernt werden;
c. Leiten des von den störenden Komponenten enfemten Prozessgases zu einer ersten Membrantrennstufe mit einer ersten Membran, welche für Helium leichter permeabel ist als für zumindest eine weitere im Prozessgas enthaltene Komponente (z.B. Stickstoff, CO₂, Ar, O₂, Methan, siehe auch oben), wobei ein erster Retentatstrom sowie ein erster Permeatstrom erzeugt wird, wobei Helium im ersten Retentatstrom abgereichert und im ersten Permeatstrom angereichert ist;
d. Leiten des ersten Retentatstroms, welcher Komponenten aufweist, die die erste Membran zurückgehalten hat, zu einer zweiten Membrantrennstufe mit einer zweiten Membran, welche für Helium leichter permeabel ist als für zumindest eine weitere im Prozessgas enthaltene Komponente (z.B. Stickstoff und/oder Methan, siehe oben), wobei ein zweiter Retentatstrom sowie ein zweiter Permeatstrom erzeugt wird, wobei Helium im zweiten Retentatstrom abgereichert und im zweiten Permeatstrom angereichert ist;
e. Abtrennen von Helium aus dem ersten heliumhaltigen Permeatstrom, welcher Komponenten aufweist, die die erste Membran durchtreten haben, mittels Druckwechseladsorption unter Erzeugung eines heliumhaltigen Produktstroms mit insbesondere hohem Heliumanteil; sowie
f. Rückführen des zweiten heliumhaltigen Permeatstroms, welcher Komponenten aufweist, die die zweite Membran durchtreten haben, zur ersten Membrantrennstufe sowie Rückführen eines Spülgases der Druckwechseladsorption zur ersten Membrantrennstufe, wobei insbesondere das Spülgas zuvor zum Spülen eines bei der Druckwechseladsorption verwendeten Adsorbers verwendet wurde.

Die beiden Membrantrennstufen können natürlich auch mittels eines Sweepgases betrieben werden. Hierzu kann z. B. auf der jeweiligen Permeatseite je ein Sweepgaseinlass vorgesehen sein.

Die zumindest eine Membran der jeweiligen Membrantrennstufe weist eine bessere bzw. höhere Permeabilität für Helium als für zumindest eine andere im Prozessgasstrom enthaltene Komponente auf. Vorzugsweise ist die Permeabilität der jeweiligen Membran für Helium am höchsten und für alle anderen Komponenten des Prozessgases niedriger. Eine derartige andere Komponente bzw. ein entsprechendes Gasmolekül kann insbesondere Stickstoff (N₂), Kohlendioxid (CO₂), Argon (Ar), Sauerstoff (02) oder Methan (CH₄) sein. Im jeweiligen Permeatstrom reichert sich entsprechend das Helium an, während es im jeweiligen Retentatstrom abgereichert wird.

Gemäß einer vorteilhaften Ausführungsform wird das Prozessgas weiterhin über eine Vorreinigungseinheit geführt, die zum Entfernen von im nachfolgenden Prozess störenden Komponenten im Prozessgas dient. Die Vorreinigungseinheit ist stromab des Verdichters sowie stromauf der ersten Membrantrennstufe vorgesehen. Die Vorreinigungseinheit weist bevorzugt zumindest eine der folgenden Funktionseinheiten auf:
- eine Temperaturwechseladsorptionseinheit,
- einen Reaktor zur Durchführung einer Reaktion zur Entfernung der störenden Komponente(n) aus dem Prozessgas (z.B. eine nicht-regenerierbare Ad- oder Chemisorptionseinheit (so genanntes Guard-Bett).
   Prinzipiell ist jedoch auch der Einsatz eines Katalysators zur Umsetzung von Spurenkomponenten (z.B. Oxidation von H₂, SiH₄, Kohlenwasserstoffe) möglich.

Die Vorreinigungseinheit ist vorzugsweise zum Abtrennen von zumindest einer der folgenden störenden Komponenten eingerichtet: H₂, Kohlenwasserstoffe, H₂O, CO₂, Ammoniak, Schwefelverbindungen, Fluorgase (SF6, NF3), Silane, Phosphine/Arsin, halogenierte Kohlenwasserstoffe (CF4, etc.), Metall-hydride etc., die z.B. bei Chemical Vapor Deposition und Alternativverfahren verwendet werden.

Zur adsorptiven Entfernung der Verunreinigungen wird bzw. werden stromauf der ersten Membrantrennstufe ein oder mehrere nicht regenerierbare Adsorber (sogenanntes Guard-Bett) als Vorreinigungseinheit eingesetzt. Alternativ kann eine Temperaturwechseladsorption (TSA) mit mindestens zwei Adsorbern eingesetzt werden. Hierbei wird der Prozessstrom zunächst in einen ersten Adsorber geleitet, in dem die Adsorption störender Komponenten durchgeführt wird. Andere Adsorber befinden sich in der Regeneration oder in Bereitschaft (Stand By). Das Gas aus dem ersten Adsorber kann, um eine hohe Bettausnutzung bei gleichzeitig hoher Reinheit zu erzielen, in einen nachfolgenden, nicht zu regenerierenden Adsorber, in das Guard-Bett geleitet werden. Durch die Anordnung einer Vorreinigungseinheit (insbesondere TSA und/oder Guard-Bett) vor den Membrantrennstufen werden die Membranen vor Verunreinigungen geschützt.

Im erfindungsgemäßen Verfahren werden bevorzugt zwei, insbesondere genau zwei, Membrantrennstufen eingesetzt, wobei bevorzugt nur die erste Membrantrennstufe als eine Vorstufe zur Druckwechseladsorptionseinheit zur Aufbereitung des Produktgases, also (reinem) Helium, aus dem zugeführten heliumhaltigen Gas angeordnet ist. Die zweite Membrantrennstufe hingegen stellt vorzugsweise ein Permeatgas für eine Rückführung zur ersten Membrantrennstufe zur Verfügung.

Zwischen der ersten Membrantrennstufe und der zweiten Membrantrennstufe ist somit eine erste Retentatstromleitung angeordnet, welche den ersten Retentatauslass der ersten Membrantrennstufe und den zweiten Produktgaseinlass der zweiten Membrantrennstufe miteinander verbindet.

Zwischen der ersten Membrantrennstufe und der Druckwechseladsorptionseinheit ist eine erste Permeatstromleitung angeordnet, welche den ersten Permeatstromauslass der ersten Membrantrennstufe und den dritten Produktgaseinlass der Druckwechseladsorptionseinheit miteinander verbindet. Die Druckwechseladsorptionseinheit weist hierbei insbesondere zumindest zwei Adsorber auf, so dass stets ein Adsorber sich im Adsorptionsbetrieb befinden kann, während der andere Adsorber regeneriert werden kann, wozu der Druck im Adsorber abgesenkt wird und der Adsorber mit einem Spülgas gespült wird. Somit lässt sich der Adsorptionsprozess kontinuierlich fahren. Andere Fahrweisen sind auch denkbar.

Zwischen dem zweiten Permeatstromauslass der zweiten Membrantrennstufe und der Zuführleitung ist zumindest eine erste Rückführleitung angeordnet, über welche der (zweite) Permeatstrom von der zweiten Membrantrennstufe in die Zuführleitung bzw. in die erste Membrantrennstufe rückführbar ist. Hierbei wird also der zweite Permeatstrom dem Prozessstrom zugeführt, so dass der Heliumanteil des Prozessstroms zur ersten Membrantrennstufe entsprechend erhöht wird. Zwischen dem Spülgasauslass und der Zuführleitung beziehungsweise der ersten Rückführleitung ist eine zweite Rückführleitung angeordnet, über welche das Spülgas dem Prozessgas zuführbar ist. Damit wird die Ausbeute deutlich erhöht; denn bei der Regenerierung der Adsorber gelangt He ins Tailgas, was ohne die Rückführung verlorengehen würde. Der zweite Retentatstromauslass führt den Gasanteil, welcher die zumindest eine zweite Membran nicht durchtreten hat bzw. letztlich auf der zweiten Retentatseite verblieben ist, als Abgas ab. Dieser Anteil weist nur noch einen sehr geringen Heliumanteil auf, bevorzugt weniger als 0,1 Vol.-% Helium.

Bei der ersten Membrantrennstufe weist der Permeatstrom bevorzugt einen Heliumanteil von 20 Vol.-% oder mehr auf. Die Druckwechseladsorption ermöglicht darauffolgend einen Heliumanteil von mehr als 95 Vol.%, bevorzugt von mehr als 99 Vol.-%. Als Membranmaterialien für die Membranen der ersten und zweiten Membrantrennstufe werden bevorzugt Polyimide (PI), Polysulfone (PSf) oder Polyaramide (PA) verwendet. Die Temperaturen in den beiden Membrantrennstufen sowie bei der Druckwechsel- und Temperaturwechseladsorption liegen bevorzugt in einem Bereich von 0 °C bis 120°C, bevorzugt in einem Bereich von 20°C bis 60°C. Die Eintrittsströme in die beiden Membrantrennstufen bzw. in die Temperaturwechseladsorption weisen vorzugsweise einen Druck im Bereich von 10 bar bis 80 bar, bevorzugt im Bereich von 15 bar bis 60 bar auf. Der Eintrittsstrom in die Druckwechseladsorption weist bevorzugt einen Druck im Bereich von 5 bar bis 20 bar auf. Der Austrittsdruck ist insbesondere jeweils 0 bar bis 3 bar niedriger als der jeweilige Eintrittsdruck.

Indem in der zweiten Membrantrennstufe ein Großteil des Heliums des Retentatstroms der ersten Membrantrennstufe als Permeatstrom abgetrennt wird, wird eine große Ausbeute erreicht beziehungsweise ein Retentatstrom mit sehr geringem Heliumanteil aus dem Prozess ausgeschleust. Das Verfahren ist insbesondere zur Rückgewinnung von Helium aus Prozessgasen bzw. Abgasströmen vorgesehen, die atmosphärischen Druck oder einen geringen Überdruck von bevorzugt bis zu 15 bar aufweisen. Es ist besonders geeignet zur Rückgewinnung von Helium aus Abgasströmen von Fertigungsverfahren insbesondere in der Elektronikindustrie und in der Halbleiterindustrie.

Der Rückführstrom von der zweiten Membrantrennstufe (zweiter Permeatstrom) sowie der Rückführstrom von der Druckwechseladsorptionseinheit (Spülgas) wird dabei bevorzugt stromauf des Verdichters in die Zuführleitung zur ersten Membrantrennstufe gegeben.

Das hier vorgeschlagene Verfahren ist besonders dazu geeignet, auf einer erfindungsgemäßen Anlage beziehungsweise einer Helium-Rückgewinnungsanlage gemäß der obigen Beschreibung ausgeführt zu werden. Charakteristisch ist bei diesem Verfahren, dass der zweite Permeatstrom der zweiten Membran sowie auch der Spülgasstrom aus der Druckwechseladsorption in die erste Membrantrennstufe zurückgeführt werden.

Dabei wird bei der ersten Membrantrennstufe bevorzugt ein erster Permeatstrom mit einem Heliumanteil von 25 Vol.-% oder mehr erzeugt. An dem Produktgasauslass der Druckwechseladsorption wird ein Produktgas bzw. Heliumgas mit einer Reinheit von 95 Vol.-% oder mehr erzeugt, bevorzugt von 99 Vol.-% oder mehr. Darüber hinaus wird der zweite Retentatstrom insbesondere verworfen oder einer weiteren Verwendung zugeführt (siehe unten).

Gemäß einer weiteren vorteilhaften Ausführungsform des Verfahrens wird das Prozessgas (insbesondere ausschließlich) stromaufwärts der ersten Membrantrennstufe verdichtet (bevorzugt auf einen Druck im Bereich von 15 bara bis 60 bara). Es ist also insbesondere möglich, bei dem erfindungsgemäßen Verfahren lediglich eine (ggf. mehrstufige) Verdichtung des Prozessgases vorzusehen. Hierdurch sind die Investitions- und Betriebskosten für dieses Verfahren entsprechend vergleichsweise gering.

Gemäß einer weiteren vorteilhaften Ausführungsform des Verfahrens wird stromaufwärts der ersten Membrantrennstufe sowie insbesondere stromab der besagten Verdichtung das Prozessgas von ggf. störenden Komponenten befreit, und zwar bevorzugt mittels einer Temperaturwechseladsorption und/oder einer sonstigen Reaktion (z.B. in einem Adsorber und/oder Reaktor).

Gemäß einer weiteren vorteilhaften Ausgestaltung des erfindungsgemäßen Verfahrens ist vorgesehen, dass das Prozessgas, aus dem Helium rückgewonnen werden soll, ein Fertigungsabgas eines Fertigungsprozesses zur Herstellung eines Elektronik-und/oder Halbleiterelementes ist, wobei insbesondere bei der besagten Vorreinigung zumindest eine der folgenden Komponenten des Prozessgases abgetrennt wird:H₂, Kohlenwasserstoffe, H₂O, CO₂, Schwefelverbindungen, Silane, Phosphine/Arsin, halogenierte Kohlenwasserstoffe, Fluorgase (SF6, NF3), Metall-hydride etc.

Gemäß einer weiteren vorteilhaften Ausgestaltung des erfindungsgemäßen Verfahrens ist vorgesehen, dass der zweite Retentatstrom, welcher Komponenten aufweist, die die zweite Membran zurückgehalten hat, zur Regeneration eines (oder mehrerer) bei der Temperaturwechseladsorption verwendeten Adsorbers verwendet wird (siehe oben). Weiterhin kann der zweite Retentatstrom, welcher die zweite Membran nicht durchtreten hat, arbeitsleistend entspannt werden, insbesondere unter Erzeugung von elektrischer Energie.

Hinsichtlich der Rückführung des zweiten Permeatstroms in die erste Membrantrennstufe sowie der Rückführung des Spülgases in die erste

Membrantrennstufe muss ggf. nicht jeweils der gesamte Strom zurückgeführt werden. Es ist auch denkbar jeweils nur einen Teilstrom in die erste Membrantrennstufe zurückzuführen.

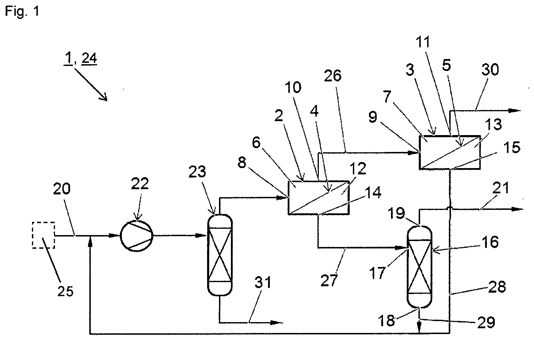

Die oben beschriebene Erfindung wird nachfolgend vordem betreffenden technischen Hintergrund unter Bezugnahme auf die zugehörigen Zeichnungen, welche bevorzugte Ausgestaltungen zeigen, detailliert erläutert. Es wird dargestellt in
- Fig. 1:: ein erfindungsgemäßes Verfahren zur Abtrennung von Helium aus einem Prozessgas bzw. ein erfindungsgemäße Helium-Abtrennlage.

In Fig. 1 ist eine erfindungsgemäße Anlage 1 gezeigt. Sofern ein zu behandelndes Prozessgas ein Abgas aus einem Fertigungsprozess oder einer Fertigungsstraße 25, insbesondere zur Herstellung von Elektronik- und/oder Halbleiterelementen, wird die Anlage auch als Helium-Rückgewinnungsanlage 24 bezeichnet und kann den Fertigungsprozess bzw. die Fertigungsstraße 25 umfassen.

Das Prozessgas bzw. Abgas wird über eine Zuführleitung 20 einem Verdichter 22 zugeführt und dort verdichtet sowie stromab des Verdichters 22 optional vorgereinigt, insbesondere mittels einer Temperaturwechseladsorption 23. Anschließend wird das ggf. vorgereinigte Prozessgas über einen ersten Prozessgaseinlass 8 einer ersten Membrantrennstufe 2 zugeführt, und zwar auf der ersten Retentatseite 6. Ein Prozessgasanteil mit hohem Heliumanteil, welcher die erste Membran 4 durchtreten kann, gelangt auf die erste Permeatseite 12 und tritt dort über den ersten Permeatstromauslass 14 als erster Permeatstrom aus und wird über die erste Permeatstromleitung 27 der Druckwechseladsorptionseinheit 16 zugeleitet.

Der Anteil des Prozessgases, welches in der ersten Membrantrennstufe 2 die erste Membran 4 nicht durchtritt bzw. durch die Membran 4 letztlich zurückgehalten wird, verbleibt auf der ersten Retentatseite 6 und wird über den ersten Retentatstromauslass 10 als erster Retentatstrom ausgeleitet. Über die erste Retentatstromleitung 26 wird der erste Retentatstrom sodann über den zweiten Prozessgaseinlass 9 in die zweite Membrantrennstufe 3 eingeleitet, nämlich auf die zweite Retentatseite 7. Das Prozessgas, welches die zweite Membran 5 durchtritt, gelangt in die zweite Permeatseite 13 und strömt über den zweiten Permeatauslass 15 als zweiter Permeatstrom in die erste Rückführleitung 28, über die der zweite Permeatstrom der Zuführleitung 20 bzw. der ersten Membrantrennstufe 2 wieder zugeführt wird, und zwar bevorzugt stromauf des Verdichters 22.

Der Prozessgasanteil in der zweiten Membrantrennstufe 3, welcher die zweite Membran 5 nicht durchtritt, wird als zweiter Retentatstrom durch den zweiten Retentatstromauslass 11 und die erste Abgasleitung 30 abgeführt. Diese (heliumarme) Abgas kann insbesondere zum Spülen von Adsorbern der Temperaturwechseladsorption 23 verwendet werden.

Der erste Permeatstrom wird über die erste Permeatstromleitung 27 sowie über den dritten Prozessgaseinlass 17 in die Druckwechseladsorptionseinheit 16 eingeleitet. Ein bei der Druckwechseladsorption anfallendes Spülgas wird über den Spülgasauslass 18 sowie über die zweite Rückführleitung 29, hier mittels der ersten Rückführleitung 28, wieder in die Zuführleitung 20 bzw. die erste Membrantrennstufe 2 gegeben, und zwar bevorzugt stromauf des Verdichters 22. Der durch Druckwechseladsorption weiter gereinigte erste Permeatstrom wird über den Produktgasauslass 19 als Produktgas bzw. reines Heliumgas, bevorzugt mit mehr als 95 Vol.-%, besonders bevorzugt mit mehr als 99 Vol.-%, Heliumanteil, ausgegeben und kann über die Produktgasleitung 21 einer weiteren Verwendung zugeführt werden. Ein Restgas der Temperaturwechseladsorption 23 wird über eine zweite Abgasleitung 31 abgeführt.

**Bezugszeichenliste**

| | |
|---|---|
| 1 | Heliumabtrennanlage |
| 2 | erste Membrantrennstufe |
| 3 | zweite Membrantrennstufe |
| 4 | erste Membran |
| 5 | zweite Membran |
| 6 | erste Retentatseite |
| 7 | zweite Retentatseite |
| 8 | erster Prozessgaseinlass |
| 9 | zweiter Prozessgaseinlass |
| 10 | erster Retentatstromauslass |
| 11 | zweiter Retentatstromauslass |
| 12 | erste Permeatseite |
| 13 | zweite Permeatseite |
| 14 | erster Permeatstromauslass |
| 15 | zweiter Permeatstromauslass |
| 16 | Druckwechseladsorptionsein heit |
| 17 | dritter Prozessgaseinlass |
| 18 | Spülgasauslass |
| 19 | Produktgasauslass |
| 20 | Zuführleitung |
| 21 | Produktgasleitung |
| 22 | Verdichterstufe |
| 23 | Vorreinigungseinheit |
| 24 | Helium-Rückgewinnungsanlage |
| 25 | Fertigungsstrecke |
| 26 | erste Retentatstromleitung |
| 27 | erste Permeatstromleitung |
| 28 | erste Rückführleitung |
| 29 | zweite Rückführleitung |
| 30 | erste Abgasleitung |
| 31 | zweite Abgasleitung |

## Patentansprüche

1. Verfahren zur Gewinnung von Helium aus einem heliumhaltigen Prozessgas, aufweisend zumindest die folgenden Schritte:
a) Zuführen eines heliumhaltigen Prozessgases zu einer Verdichtung (22), wobei das heliumhaltige Prozessgas einen Druck von weniger als 15 bar, vorzugsweise von weniger als 10 bar aufweist,
b) Zuführen des aus der Verdichtung (22) austretenden Prozessgases zu einer Vorreinigungseinheit (23), bei der die störenden Komponenten entfernt werden;
c) Leiten des von den störenden Komponenten entfernten Prozessgases zu einer ersten Membrantrennstufe (2) mit einer ersten Membran (4), welche für Helium leichter permeabel ist als für zumindest eine weitere im Prozessgas enthaltene Komponente;
d) Leiten eines ersten Retentatstroms, welcher die erste Membran (4) nicht durchtreten hat, zu einer zweiten Membrantrennstufe (3) mit einer zweiten Membran (5), welche für Helium leichter permeabel ist als für zumindest eine weitere im Prozessgas enthaltene Komponente;
e) Abtrennen von Helium aus einem ersten heliumhaltigen Permeatstrom, welcher die erste Membran (4) durchtreten hat, mittels Druckwechseladsorption unter Erzeugung eines heliumhaltigen Produktstroms; und
f) Rückführen eines zweiten heliumhaltigen Permeatstroms, welcher die zweite Membran (5) durchtreten hat, zur ersten Membrantrennstufe (2) sowie Rückführen eines Spülgases der Druckwechseladsorption (16) zur ersten Membrantrennstufe (2).

2. Verfahren nach Anspruch 1, **dadurch gekennzeichnet, dass** bei der Vorreinigungseinheit (23) eine Temperaturwechseladsorption oder eine Reaktion insbesondere eine thermische Oxidation durchgeführt wird.

3. Verfahren nach einem der Ansprüche 1 bis 2, **dadurch gekennzeichnet, dass** das Prozessgas ein Fertigungsabgas eines Fertigungsprozesses (25) zur Herstellung eines Elektronik- und/oder Halbleiterelementes ist, wobei die bei der besagten Vorreinigung zu entfernenden störenden Komponenten zumindest eine der folgenden Komponenten aufweist: H₂, ein Kohlenwasserstoff, H₂O, CO₂, eine Schwefelverbindung, ein Silan, ein Phosphin, Arsin, ein halogeniertes Kohlenwasserstoff, ein Fluorgas, insbesondere SF6 oder NF3,ein Metall-hydrid.

4. Verfahren nach einem der Ansprüche 1 bis 3, **dadurch gekennzeichnet, dass** ein zweiter Retentatstrom (30), welcher die zweite Membran (5) nicht durchtreten hat, zur Regeneration eines bei der Temperaturwechseladsorption (23) verwendeten Adsorbers verwendet wird.

5. Verfahren nach einem der Ansprüche 1 bis 4, **dadurch gekennzeichnet, dass** ein zweiter Retentatstrom (30), welcher die zweite Membran (5) nicht durchtreten hat, arbeitsleistend entspannt wird, insbesondere unter Erzeugung von elektrischer Energie.

6. Verfahren nach einem der Ansprüche 1 bis 5, **dadurch gekennzeichnet, dass** der Heliumgehalt des ersten Permeatstroms größer oder gleich 25 Vol.-% ist, und/oder dass der Heliumgehalt des Produktstroms größer oder gleich 95 Vol.-% ist, insbesondere größer oder gleich 99 Vol.-%.

7. Verfahren nach einem der Ansprüche 1 bis 6, **dadurch gekennzeichnet, dass** der heliumhaltige Prozessgas einen Helium-Gehalt von mehr als 0.1 vol. -% aufweist, vorzugsweise von mehr als 0,5 vol. -%.

## Claims

1. Method of obtaining helium from a helium-containing process gas, having at least the following steps:
a) feeding a helium-containing process gas to a compression (22), said helium-containing process gas having a pressure of less than 15 bar, preferably of less than 10 bar,
b) feeding the process gas that leaves the compression (22) to a prepurifying unit (23) in which the troublesome components are removed;
c) guiding the process gas removed from the troublesome components to a first membrane separation stage (2) having a first membrane (4) which is more readily permeable for helium than for at least one further component present in the process gas;
d) guiding a first retentate stream that has not passed through the first membrane (4) to a second membrane separation stage (3) having a second membrane (5) which is more readily permeable for helium than for at least one further component present in the process gas;
e) separating helium from a first helium-containing permeate stream that has passed through the first membrane (4) by means of pressure swing adsorption to produce a helium-containing product stream; and
f) recycling a second helium-containing permeate stream that has passed through the second membrane (5) to the first membrane separation stage (2), and recycling a purge gas from the pressure swing adsorption (16) to the first membrane separation stage (2).

2. Method according to Claim 1, **characterized in that** a temperature swing adsorption or a reaction, especially a thermal oxidation, is conducted in the prepurifying unit (23).

3. Method according to either of Claims 1 and 2, **characterized in that** the process gas is a manufacturing offgas from a manufacturing process (25) for production of an electronic and/or semiconductor element, the troublesome components to be removed in said prepurification including at least one of the following components: H₂, a hydrocarbon, H₂O, CO₂, a sulphur compound, a silane, a phosphine, arsine, a halogenated hydrocarbon, a fluorine gas, especially SF6 or NF3, a metal hydride.

4. Method according to any of Claims 1 to 3, **characterized in that** a second retentate stream (30) that has not passed through the second membrane (5) is used for regeneration of an adsorber used in the temperature swing adsorption (23).

5. Method according to any of Claims 1 to 4, **characterized in that** a second retentate stream (30) that has not passed through the second membrane (5) is expanded to perform work, especially with generation of electrical energy.

6. Method according to any of Claims 1 to 5, **characterized in that** the helium content of the first permeate stream is not less than 25% by volume, and/or **in that** the helium content of the product stream is not less than 95% by volume, especially not less than 99% by volume.

7. Method according to any of Claims 1 to 6, **characterized in that** the helium-containing process gas has a helium content of more than 0.1% by volume, preferably of more than 0.5% by volume.

## Revendications

1. Procédé d'obtention d'hélium à partir d'un gaz de procédé contenant de l'hélium, comprenant au moins les étapes suivantes:
a) l'introduction d'un gaz de procédé contenant de l'hélium dans une compression (22), le gaz de procédé contenant de l'hélium présentant une pression de moins de 15 bar, de préférence de moins de 10 bar,
b) l'introduction du gaz de procédé sortant de la compression (22) dans une unité de pré-purification (23), dans laquelle les composants dérangeants sont éliminés ;
c) l'acheminement du gaz de procédé débarrassé des composants dérangeants dans une première étape de séparation sur membrane (2) avec une première membrane (4) qui est plus facilement perméable pour l'hélium que pour au moins un autre composant contenu dans le gaz de procédé ;
d) l'acheminement d'un premier courant de rétentat qui n'a pas traversé la première membrane (4) dans une deuxième étape de séparation sur membrane (3) avec une deuxième membrane (5) qui est plus facilement perméable pour l'hélium que pour au moins un autre composant contenu dans le gaz de procédé ;
e) la séparation de l'hélium d'un premier courant de perméat contenant de l'hélium qui a traversé la première membrane (4) par adsorption modulée en pression avec formation d'un courant de produits contenant de l'hélium ; et
f) le recyclage d'un deuxième courant de perméat contenant de l'hélium qui a traversé la deuxième membrane (5) dans la première étape de séparation sur membrane (2) et le recyclage d'un gaz de rinçage de l'adsorption modulée en pression (16) dans la première étape de séparation sur membrane (2).

2. Procédé selon la revendication 1, **caractérisé en ce qu'**une adsorption modulée en température ou une réaction, notamment une oxydation thermique, est réalisée dans l'unité de pré-purification (23).

3. Procédé selon l'une quelconque des revendications 1 à 2, **caractérisé en ce que** le gaz de procédé est un gaz d'échappement de production d'un procédé de production (25) pour la fabrication d'un élément électronique et/ou semi-conducteur, les composants dérangeants à éliminer lors de ladite pré-purification comprenant au moins un des composants suivants : H₂, un hydrocarbure, H₂O, CO₂, un composé de soufre, un silane, une phosphine, une arsine, un hydrocarbure halogéné, un gaz fluoré, notamment SF6 ou NF3, un hydrure de métal.

4. Procédé selon l'une quelconque des revendications 1 à 3, **caractérisé en ce qu'**un deuxième courant de rétentat (30) qui n'a pas traversé la deuxième membrane (5) est utilisé pour la régénération d'un adsorbeur utilisé lors de l'adsorption modulée en température (23).

5. Procédé selon l'une quelconque des revendications 1 à 4, **caractérisé en ce qu'**un deuxième courant de rétentat (30) qui n'a pas traversé la deuxième membrane (5) est détendu avec production de travail, notamment avec génération d'énergie électrique.

6. Procédé selon l'une quelconque des revendications 1 à 5, **caractérisé en ce que** la teneur en hélium du premier courant de perméat est supérieure ou égale à 25 % en volume et/ou **en ce que** la teneur en hélium du courant de produits est supérieure ou égale à 95 % en volume, notamment supérieure ou égale à 99 % en volume.

7. Procédé selon l'une quelconque des revendications 1 à 6, **caractérisé en ce que** le gaz de procédé contenant de l'hélium présente une teneur en hélium de plus de 0,1 % en volume, de préférence de plus de 0,5 % en volume.
